Europäisches Patentamt

European Patent Office

Office européen des brevets

(11) Veröffentlichungsnummer: **0 330 657 B1**

(12) **EUROPÄISCHE PATENTSCHRIFT**

(45) Veröffentlichungstag der Patentschrift:
25.09.91 Patentblatt 91/39

(51) Int. Cl.⁵: **F16C 13/00**

(21) Anmeldenummer: 87906424.4

(22) Anmeldetag: 07.10.87

(86) Internationale Anmeldenummer:
PCT/EP87/00578

(87) Internationale Veröffentlichungsnummer:
WO 88/03610 19.05.88 Gazette 88/11

(54) **WALZE.**

(30) Priorität: 07.11.86 DE 3638070

(43) Veröffentlichungstag der Anmeldung:
06.09.89 Patentblatt 89/36

(45) Bekanntmachung des Hinweises auf die
Patenterteilung:
25.09.91 Patentblatt 91/39

(84) Benannte Vertragsstaaten:
AT DE FR GB IT SE

(56) Entgegenhaltungen:
GB-A- 2 112 086
GB-A- 2 136 091
US-A- 3 512 475

(73) Patentinhaber: J.M. Voith GmbH
Postfach 1940 St. Pöltener Strasse 43
W-7920 Heidenheim (DE)

(72) Erfinder: SCHIEL, Christian
Albrecht-Dürer-Str. 90
W-7920 Heidenheim (DE)

(74) Vertreter: Weitzel, Wolfgang, Dr.-Ing. et al
St. Pöltener Strasse 43
W-7920 Heidenheim (DE)

## Beschreibung

Die Erfindung betrifft eine Walze für Maschinen zur Herstellung oder Behandlung von Papier-, Karton-, Textilbahnen od. dgl., mit den im Oberbegriff des Anspruchs 1 bzw. des Anspruchs 2 angegebenen Merkmalen. Es handelt sich um eine Walze, die bedingt durch ihren spezifischen Einsatz zu unerwünschten Vibrationen angeregt werden kann. Solche Vibrationsprobleme in Pressenpartien und Glättwerken von Papiermaschinen sind schon häufig in der Fachliteratur beschrieben worden.

Beispiele

1.    DE-OS 3306838 (= US-PS 4,598,448)
2.    US-PS 3,512,475
3.    DE-OS 3151001 (= US-PS 4,514,887)
4.    J.B. Wheeldon und Dr. R.W. Hoyland, The British Paper and Board Industry Federation Spring Conference 11-12. März 1981 "Practical Results of Vibration Analysis".

Die Merkmale des Oberbegriffs des Anspruchs 1 sind bekannt aus Druckschrift 1.
Die Merkmale des Oberbegriffs des Anspruchs 2 sind bekannt aus Druckschrift 3.
Es handelt sich bei diesen unerwünschten Schwingungen hauptsächlich um Kontaktschwingungen zwischen zwei Walzen. Die erfindungsgemäße Walze bildet also in der Regel mit einer Gegenwalze einen Preßspalt, durch den die zu behandelnde Bahn läuft ; vorzugsweise kann sie als Durchbiegungsausgleichswalze ausgebildet sein. Die Erfindung ist jedoch auch bei einer einzelnen Walze, z.B. Papier- oder Filzleitwalze anwendbar, die im Bereich ihrer kritischen Drehzahl zum Vibrieren neigt.

In der Druckschrift 1 ist eine Einrichtung zur Vibrationsdämpfung am Beispiel einer sogenannten schwimmenden Walze beschrieben. Dies ist eine der verschiedenen bekannten Bauformen von Durchbiegungseinstellwalzen. Der zwischen der feststehenden Zentralachse und dem drehbaren Walzenmantel befindliche ringförmige Zwischenraum ist mittels zweier Längsdichtungen in zwei annähernd gleich große, maschinenbreite und flüssigkeitsgefüllte halbringförmige Kammern unterteilt. Eine dieser Kammern (die im Anspruch 1 als "erste Kammer" bezeichnet ist) steht in der Regel unter Überdruck und dient zum Übertragen einer hydraulischen Stützkraft von der Zentralachse auf den Walzenmantel. Als Einrichtung zur Vibrationsdämpfung sind zwischen Walzenmantel und Zentralachse isolierte Flüssigkeitspolster vorgesehen. Theoretische Überlegungen haben ergeben, daß deren Wirkung nicht ausreichend ist, so daß man bis heute von einer praktischen Anwendung abgesehen hat.

Eine andere bekannte Durchbiegungseinstellwalze ist in Druckschrift 2 beschrieben. Dort ist ebenfalls eine feststehende Zentralachse und ein rotierender Walzenmantel vorhanden. In diesem Falle sind zur Übertragung von Stützkräften von der Zentralachse auf die Innenfläche des Walzenmantels zwei einander gegenüberliegende Gleitschuhe vorgesehen, die auf je einem radial verschiebbaren Kolben abgestützt sind. Jeder der Kolben ist in einer Ausnehmung 27 der Zentralachse geführt. Beide Ausnehmungen können von außen mit Druckflüssigkeit beaufschlagt werden ; sie können außerdem mit einer gewissen Anzahl von Drosselbohrungen unter sich verbunden werden. Somit entspricht die eine Ausnehmung der im Anspruch 1 angegebenen "ersten Kammer" und die andere der "zweiten Kammer". Mit dieser bekannten Anordnung soll ebenfalls eine Dämpfung von Vibrationen des Walzenmantels herbeigeführt werden. Ihre Wirksamkeit erscheint jedoch zweifelhaft. Unbefriedigend ist in jedem Falle der hohe Bauaufwand für die zwei einander gegenüberliegenden Schuhe. Dieser Aufwand ist nur dann gerechtfertigt, wenn die Walze, wie in Druckschrift 2 vorgesehen, zwischen zwei Gegenwalzen angeordnet ist und mit jeder dieser Walzen einen Preßspalt bildet. Als Durchbiegungseinstellwalze in Anordnungen mit nur einem einzigen Preßspalt ist diese bekannte Walze nicht geeignet, weil sich in den beiden "Kammern" 27 stets im wesentlichen der gleiche Druck einstellen wird.

Die Druckschrift 3 beschreibt eine Durchbiegungseinstellwalze, bei der das Übertragen von Stützkräften von der Zentralachse auf den Walzenmantel mit Hilfe von Gleitschuhen 8 stattfindet, die relativ zur Zentralachse radial beweglich sind und hydrostatische Lagertaschen 18, 25 haben. Zwischen den Gleitschuhen 8 und der Zentralachse befinden sich Zylinderräume 14 bzw. 21, entsprechend der im Anspruch 2 genannten "ersten Kammer". Die Zylinderräume sind von außen mit Druckmittel beaufschlagbar und stehen über sogenannte Ausgangskanäle 17 bzw. 24 mit den hydrostatischen Lagertaschen 18 bzw. 25 in Verbindung. Auch hier wird das Dämpfen von Vibrationen des Walzenmantels angestrebt. Zu diesem Zweck ist an die zu den Druckräumen führende Druckmittelleitung ein elastisch wirkender und extern angeordneter Druckspeicher 35 angeschlossen, entsprechend der im Anspruch 2 genannten "zweiten Kammer". Ein Nachteil dieser bekannten Vorrichtung besteht darin, daß zwischen der Innenfläche des Walzenmantels und den Rändern der Lagertaschen dauernd eine verhältnismäßig große Druckflüssigkeitsmenge überströmen muß, die als Leckflüssigkeit aus der Walze entfernt und wieder zurückgeführt werden muß.

Es ist Aufgabe der vorliegenden Erfindung, die bekannten Walzen dahingehend zu verbessern, daß mit möglichst geringem Aufwand eine möglichst wirksame Dämpfung der Vibrationen des Walzenmantels erzielbar ist.

Diese Aufgabe wird durch die im Anspruch 1 bzw. im Anspruch 2 angegebenen Merkmale gelöst. Im Anspruch 1 ist (wie schon erwähnt) vorausgesetzt, daß die "erste Kammer" die Form eines halbringförmigen, zwischen der feststehenden Zentralachse und dem drehbaren Walzenmantel befindlichen Zwischenraumes hat. Gemäß Druckschrift 1 ist bei einer bekannten Walze dieser Bauart die erste Kammer über eine verengte Leitung mit einer ebenfalls im Inneren der Walze befindlichen zweiten Kammer verbunden. Diese ist dort innerhalb der ersten Kammer durch einen Ringkolben begrenzt, der mit einer Stirnfläche an der Innenfläche des Walzenmantels anliegt, wobei der zwischen dem Walzenmantel und der Stirnfläche befindliche Spalt die verengte Leitung zwischen der ersten Kammer und der zweiten Kammer bildet. Abweichend von diesem Stand der Technik ist gemäß der Erfindung vorgesehen, daß die in der zweiten Kammer befindliche Flüssigkeit die zweite Kammer nur teilweise ausfüllt, so daß sich in der zweiten Kammer das Flüssigkeitsvolumen beliebig einstellen, d.h. insbesondere sich mit hoher Geschwindigkeit verändern kann. Die Erfindung beruht nämlich u.a. auf der Erkenntnis, daß es sich bei den zu dämpfenden Vibrationen um Schwingungen mit in der Regel sehr kleinen Amplituden handelt, die meistens deutlich unter 0,1 mm liegen, und daß durch die Merkmale der Erfindung gerade derartige Schwingungen besonders effektiv gedämpft werden können. Insbesondere im Stadium des Entstehens eines Schwingungszustandes sind die Schwingungsamplituden sehr klein. Dies wurde bisher nicht ausreichend beachtet ; jedenfalls entfalten konventionelle Vibrations-Dämpfer ihre volle Wirkung erst bei größeren Amplituden. Der Frequenzbereich der Vibrationen, die durch die Erfindung gedämpft werden können, liegt etwa zwischen 50 und 400 Hz.

Der Anspruch 2 setzt voraus, daß wenigstens eine mit Flüssigkeit gefüllte "erste Kammer" vorhanden ist in Form eines Zylinderraumes, der gebildet ist zwischen der Zentralachse und einem am Walzenmantel anliegenden Gleitschuh, der relativ zur Zentralachse in radialer Richtung verschiebbar ist. Bei einer bekannten Walze dieser Bauart (Druckschrift 3) ist — wie schon erwähnt — zum Dämpfen von Vibrationen des Walzenmantels außerhalb der Walze eine "zweite Kammer" in Form eines elastisch wirkenden (und somit nur teilweise mit Flüssigkeit gefüllten) Druckspeichers vorgesehen. Diese Anordnung macht sehr lange, durch die Zentralachse nach außen geführte Verbindungsleitungen zwischen der ersten Kammer und der zweiten Kammer erforderlich. Die in dieser langen Leitung befindliche Flüssigkeitsmasse erzeugt eine weitgehend starre hydraulische Koppelung zwischen der Zentralachse und dem Walzenmantel. Hierdurch wird der gewünschte Dämpfungseffekt fast vollständig zunichte gemacht. Abweichend von diesem Stand der Technik ist gemäß der Erfindung vorgesehen, daß die zum Volumenausgleich dienende zweite Kammer, genauso wie die erste Kammer, im Inneren der Walze angeordnet ist. Sie ist also unmittelbar in oder an der Zentralachse angebracht und über eine kurze verengte Leitung, z.B. eine Drosselbohrung, mit der ersten Kammer verbunden. Hierdurch wird es möglich, wie beim Gegenstand des Anspruchs 1, insbesondere Schwingungen des Walzenmantels mit sehr kleinen Amplituden wirksam zu dämpfen.

Die stets unmittelbar in oder an der Zentralachse angeordnete zweite Kammer ist im einfachsten Fall, d.h. bei Atmosphärendruck in den Kammern, ein Volumen-Ausgleichgefäß, dessen oberer, mit Luft gefüllter Bereich über eine Be- und Entlüftungsleitung mit der freien Umgebung der Walze verbunden ist (Anspruch 3). Meistens wird jedoch in der ersten Kammer ein Überdruck eingestellt. In diesem Falle ist die zweite Kammer, die wiederum unmittelbar in oder an der Zentralachse angeordnet ist, wie aus Druckschrift 3 kannt, als elastisch nachgiebiger Druckspeicher ausgebildet (Anspruch 4). In diesem Falle wirkt dem Flüssigkeitsdruck in der zweiten Kammer der Druck eines Gaspolsters, die Kraft einer Feder od.dgl. entgegen. Die Höhe des Gasdruckes bzw. die Federkraft macht man vorzugsweise veränderbar, so daß man die Vibrationsdämpfung optimieren kann. Zu diesem Zweck besteht außerdem die Möglichkeit, die Anzahl und/oder Größe der verengten Leitungen, welche die beiden Kammern miteinander verbinden, zu variieren. Selbstverständlich kann man anstelle nur einer einzigen zweiten Kammer auch mehrere Kammern dieser Art vorsehen, um den optimalen Dämpfungseffekt zu erzielen

Der Antrieb für die Flüssigkeitsströmung durch die Engstellen beruht auf der schweren Masse der Zentralachse ; deren Biegeschwing-Eigenfrequenz ist um ein Vielfaches niedriger als die zu dämpfende Vibrationsfrequenz des Walzenmantels.

Ohne die Möglichkeit des im wesentlichen unbehinderten Flüssigkeitsaustausches zwischen der ersten Kammer und der wenigstens einen zweiten Kammer würde die in der ersten Kammer befindliche, nicht kompressible Flüssigkeit einfach die feststehende Zentralachse mit der Vibrationsfrequenz des Mantels mitbewegen. Es bestünde eine starre Koppelung zwischen Walzenmantel und Zentralachse. Wäre andererseits die zwischen der Zentralachse und dem Walzenmantel befindliche erste Kammer mit einem kompressiblen Gas gefüllt, dann könnte der Walzenmantel praktisch unbeeinflußt durch die Zentralachse schwingen. Auch wenn die erste Kammer nur teilweise mit einem kompressiblen Gas, also nicht vollkommen mit Flüssigkeit gefüllt wäre oder wenn die Engstellen zwischen der ersten und der zweiten Kammer nicht vorhanden wären, wenn also keine Flüssigkeitsreibung in den Engstellen stattfinden würde, dann wäre eine Dämpfung der Vibrationen nicht möglich.

Bei Vorhandensein eines Gaspolsters wird die Dämpfungswirkung verbessert, wenn in der zweiten Kammer eine nachgiebige Zwischenwand vorgesehen ist. Hierdurch wird das Gaspolster von der Flüssigkeit getrennt und somit vermieden, daß Gasblasen über die Engstellen in die erste Flüssigkeitskammer gelangen (Anspruch 5).

In beiden obigen Varianten gemäß Anspruch 4 oder 5 kann man das Gasvolumen nach außen hermetisch abschließen, d.h. die Gasfüllung muß während des Betriebes der Walze nicht ergänzt werden (Anspruch 6).

Nach einem weiteren Gedanken der Erfindung (Anspruch 7) ist vorgesehen, bei Änderung des Druckes in der ersten Flüssigkeitskammer die Gasmasse in der zweiten Kammer so anzupassen, daß das dort befindliche Gasvolumen etwa konstant bleibt. Dies hat den Vorteil, daß mit steigendem Flüssigkeitsdruck keine Verringerung des Gasvolumens und somit keine Verringerung des Volumenausgleichsvermögens der zweiten Kammer einhergeht. Der Gasraum der zweiten Kammer kann zu diesem Zweck über eine Verbindungsleitung durch die Zentralachse mit einem äußeren Gasakkumulator in Verbindung stehen, der druckabhängig so gesteuert ist, daß er bei Druckerhöhung in der ersten Flüssigkeitskammer eine entsprechende Gasmasse über die Verbindungsleitung nachschiebt und bei Druckminderung in der ersten Flüssigkeitskammer eine entsprechende Gasmasse abzieht.

Gemäß Anspruch 8 ist weiterhin vorgesehen, den verengten Querschnitt nicht als Drosselblende sondern als Drosselspalt oder Drosselbohrung auszubilden. Denn bei der Drosselblende steigt der für die Umsetzung von kinetischer Energie in Reibungswärme verantwortliche Differenzdruck mit dem Quadrat der Strömungsgeschwindigkeit an, beim Drosselspalt oder bei der Drosselbohrung hingegen linear. D.h., daß die Energieumsetzung im Falle der Drosselblende bei kleinen Amplituden bedeutungslos wird, wenn man die optimale Energieumsetzung für eine größere Amplitude dimensioniert. Umgekehrt wird die Engergieschluckung bei großen Amplituden äußerst gering, wenn die Drosselblende für kleine Amplituden dimensioniert ist. (Im letzteren Fall findet eine beinahe starre Kopplung zwischen Walzenmantel und Zentralachse statt.)

Diesem ungünstigen Verhalten der Drosselblende geht man aus dem Wege, wenn man mit Hilfe eines Drosselspalts oder einer Drosselbohrung den Hauptanteil der Energieumsetzung durch Wandreibung bei niedriger Strömungsgeschwindigkeit bewirkt.

Eine sehr einfache bevorzugte Ausgestaltung der Erfindung sieht vor, das Gasvolumen in den zweiten Kammern in Form von an beiden Enden verschlossenen gasgefüllten Schläuchen bereitzustellen (Anspruch 9).

Eine ebenso einfache Alternative besteht darin, das nötige Gasvolumen in Form kleiner Bläschen in einem geschäumten Elastomerkörper unterzubringen (Anspruch 10).

Aufgrund des Strömungswiderstandes der verengten Verbindungsleitungen wird die Zentralachse bei Schwingung des Walzenmantels teilweise mitbewegt. Wird sie (wegen zu großer Strömungsquerschnitte in den Verbindungsleitungen) zu wenig mitbewegt, z.B. unter 10% der Mantelamplitude, dann sinkt die Umsetzung von Schwingungsenergie in Reibungswärme so stark ab, daß unter Umständen der Dämpfungseffekt nicht mehr ausreicht. Gleiches gilt, wenn die Schwingungsamplitude der Zentralachse, wegen zu kleiner Strömungsquerschnitte der Verbindungsleitungen, größer als etwa 90% der Mantelamplitude ist. Auch in diesem Falle wäre die Dämpfung nicht mehr genügend. Um dies zu verhindern, ist gemäß Anspruch 11 in Verbindung mit der Lehre des Anspruchs 7 vorgesehen, je nach der hauptsächlich zu dämpfenden Schwingfrequenz, den Querschnitt der verengten Verbindungsleitung zwischen der ersten Kammer und der zweiten Kammer (bzw. die Summe aller Querschnitte dieser Verbindungsleitungen) auf einen Wert zwischen dem 0,0005- bis 0,05-fachen derjenigen Begrenzungsfläche der ersten Kammer festzulegen, welche die auf den Walzenmantel wirkende Stützkraft erzeugt. Im Falle einer schwimmenden Walze wird die genannte Begrenzungsfläche der ersten Kammer durch die Innenfläche des Walzenmantels selbst gebildet. Im Falle einer Walze mit Stützung des Walzenmantels durch Gleitschuhe wird die genannte Begrenzungsfläche der ersten Kammer durch die Stirnflächen der Kolben der Gleitschuhe gebildet. Anspruch 11 besagt mit anderen Worten : Die hydraulische Übersetzung der sehr kleinen Amplitude der Schwingung des Walzenmantels in den verhältnismäßig großen Strömungsweg der Flüssigkeit in der Engstelle soll zwischen 1 : 2000 und 1 : 20 liegen.

Gemäß Anspruch 12 ist in einer weiteren bevorzugten Ausgestaltung der Erfindung vorgesehen, den Zwischenraum zwischen der Zentralachse und dem rotierenden Walzenmantel durch Längsdichtleisten und Stirndichtungen in zwei annähernd gleich große halbringförmige und mit Flüssigkeit gefüllte Kammern zu unterteilen ; d.h. es sind zwei "erste Kammern" vorhanden. Wesentlich ist nun, daß jeder ersten Kammer mindestens eine als Druckspeicher ausgebildete zweite Kammer zugeordnet wird und daß mindestens eine der Verbindungsleitungen (zwischen einer ersten und einer zweiten Kammer) als verengte Leitung ausgebildet ist.

Die an die andere (halbringförmige) Kammer angeschlossenen Verbindungsleitungen zu der zugeordneten zweiten Kammer (bzw. zu den zugeordneten zweiten Kammern) können mit oder ohne Engstellen ausgeführt werden. Wenn damit gerechnet werden muß, daß eine der beiden ersten Kammern nicht immer ganz mit Flüssigkeit gefüllt ist, dann entfallen die Engstellen an derjenigen ersten Kammer, in welcher der niedrigere Druck herrscht und somit zeitweise ein Volumenanteil an Gas erwartet wird.

In einer weiteren Ausgestaltung der Erfindung wird der rotierende Walzenmantel, entsprechend EP-PS 0043119, auf gleich großer Lagerentfernung abgestützt wie der Zentralanker. Bei dieser Bauart wird eine Resonanz zwischen der Eigenschwingung der Zentralachse und der Kontaktschwingung des Walzenmantels relativ zur Gegenwalze vermieden und außerdem wird dadurch die relative Beweglichkeit zwischen dem Walzenmantel und der Zentralachse erweitert, was zu einer verbesserten Tilgung von Schwingungsenergie führt.

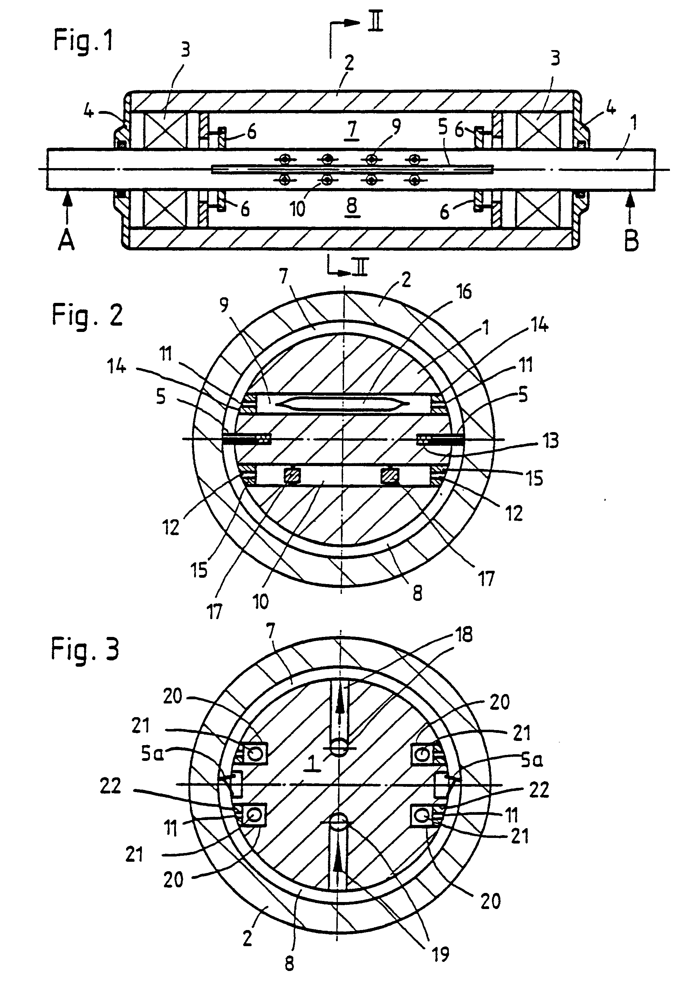

Die Erfindung ist anhand der Figuren 1 bis 9 näher erläutert.

| Fig. 1 | ist ein schematischer Längsschnitt durch eine Walze mit Vibrationsdämpfung. |
| Fig. 2 | ist ein Querschnitt durch eine ähnliche Walze wie Figur 1, entlang deren Schnittlinie II-II. |
| Fig. 3 | ist ein Querschnitt durch eine Walze mit anderer Anordnung der Dämpfungsglieder. |
| Fig. 4 | ist ein vergrößerter Querschnitt durch das Dämpfungsglied der Fig. 3. |
| Fig. 5 | ist eine Draufsicht auf das Dämpfungsglied in Pfeilrichtung P der Fig. 4. |
| Fig. 6 | zeigt einen Teil-Längsschnitt durch eine, andere Konstruktionsvariante der Walze. |
| Fig. 7 | zeigt schematisch einige Steuerungselemente für eine vibrationsgedämpfte Walze. |
| Die Fig. 8 u. 9 | zeigen zwei weitere Ausführungsformen von Dämpfungsgliedern. |

In der Figur 1 bedeutet 1 die feststehende Zentralachse, die bei A und B auf dem nicht gezeichneten Maschinengestell bzw. an beweglichen Hebeln abgestützt ist. Um diese Zentralachse 1 ist ein rotierbarer Walzenmantel 2 in Pendelrollenlagern 3 gelagert. Seitlich ist der rotierende Mantel 2 durch Deckel 4 verschlossen. Das Innere des Walzenmantels 2 ist mittels zweier Längsdichtungen 5 und Stirndichtanordnungen 6 in zwei halbringförmige Kammern 7 und 8 unterteilt, von denen mindestens eine im Betriebszustand vollständig mit Flüssigkeit gefüllt und somit als "erste Kammer" im Sinne des Anspruches 1 ausgebildet ist. In den Figuren 1 bis 3 ist angenommen, daß beide halbringförmige Kammern 7 und 8 dauernd vollständig mit Flüssigkeit gefüllt sind und daß somit beide eine "erste Kammer" im Sinne des Anspruches 1 bilden. Flüssigkeitszu- und Abführleitungen von außen zu den Kammern 7 und 8 sind nicht gezeigt, werden aber in der Regel vorhanden sein. In der Zentralachse 1 sind als Querbohrungen 9, 10 ausgebildete "zweite Kammern" vorgesehen, die über verengte Öffnungen 11/12 mit den flüssigkeitsgefüllten "ersten Kammern" 7/8 verbunden sind. In Fig. 1 ist angenommen, die Zentralachse 1 habe über ihre Länge gleichbleibenden Durchmesser. In der Regel ist jedoch der Durchmesser der Zentralachse 1 im Bereich zwischen den beiden Lagern 3 nur wenig kleiner als der Innendurchmesser des Walzenmantels, so wie in den anderen Figuren dargestellt.

In Figur 2 erkennt man wieder die Zentralachse 1 mit dem sie umgebenden Walzenmantel 2 und die Längsdichtungen 5, die durch Federn 13 an den Walzenmantel 2 angepreßt werden. Die obere halbringförmige "erste Kammer" 7 ist über Engstellen 11 (in Stopfen 14 eingearbeitete Drosselbohrungen) mit der als Querbohrung 9 ausgebildeten "zweiten Kammer" verbunden. Im Inneren der Querbohrung 9 befindet sich ein gasgefüllter, hermetisch verschlossener Schlauchabschnitt 16, der aus einem nachgiebigen gummiartigen Werkstoff hergestellt ist.

Die untere, ebenfalls als Querbohrung 10 ausgebildete "zweite Kammer" ist über Engstellen 12 in Stopfen 15 mit der unteren ersten Flüssigkeitskammer 8 verbunden. In der Querbohrung 10 befinden sich horizontal frei bewegliche zur Wandung der Querbohrung 10 dichtende Schwebekolben 17. Der zwischen den Schwebekolben 17 befindliche Abschnitt der Querbohrung 10 ist gasgefüllt.

In Figur 3, die ebenfalls einen Querschnitt durch eine erfindungsgemäße Walze darstellt, bedeuten 1 die Zentralachse, 2 den Walzenmantel, 5a die Längsdichtungen, 7 und 8 die flüssigkeitsgefüllten ersten Kammern, 18 eine von außen kommende Flüssigkeitszuleitung und 19 eine nach außen führende Entleerleitung. In die Zentralachse 1 sind oberhalb und unterhalb einer jeden Längsdichtung 5a je eine "zweite Kammer" in Form einer Längsnut 20 eingefräst. In jeder dieser Längsnuten 20 liegt ein hermetisch verschlossener Gummi-Schlauch 21, der ein Gas enthält. Der durch die Längsnuten 20 gebildete Hohlraum ist durch Deckel 22 verschlossen, in die Engstellen 11 (z.B. Drosselbohrungen) eingearbeitet sind.

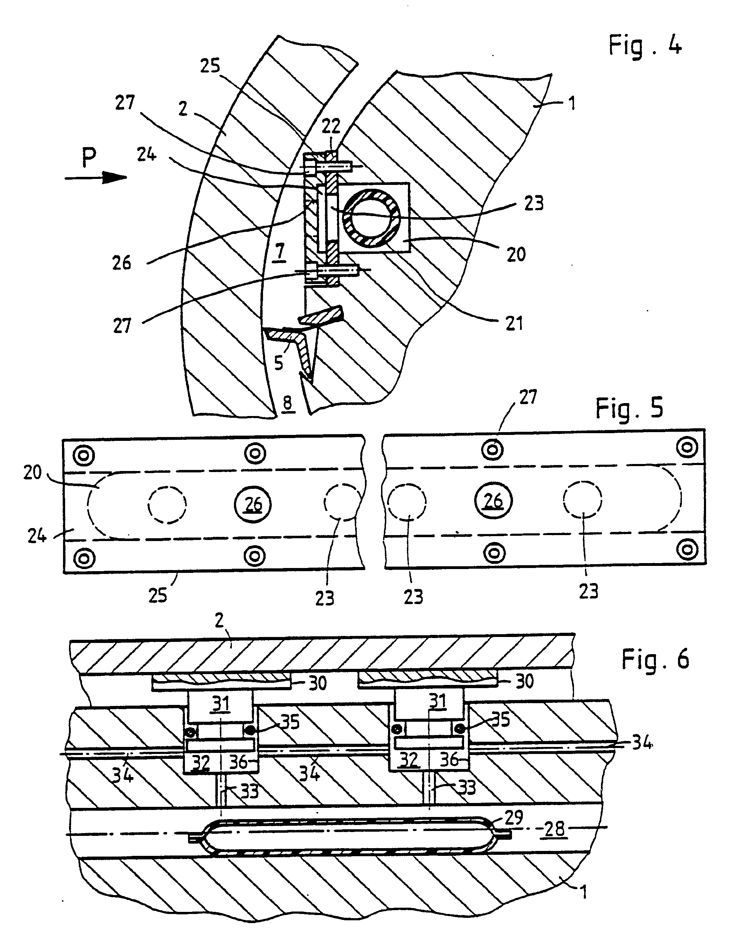

Die Figur 4 zeigt eine dieser als Längsnuten 20 ausgebildeten "zweiten Kammern" in vergrößertem Maßstab mit einer von Fig. 3 abweichenden Bauform der Engstellen. Der Deckel 22 besitzt über die Breite verteilte Öffnungen 23, die in einen flachen Kanal 24 münden, der in einem weiteren Deckel 25 eingearbeitet ist. Dieser Deckel 25 hat Öffnungen 26, die zu den Öffnungen 23 axial versetzt angeordnet sind und den Kanal 24 mit der ersten Flüssigkeitskammer 7 verbinden. Der Kanal 24 bildet somit einen die erste Kammer 7 mit der zweiten Kammer 20 verbindenden Drosselspalt.

Beide Deckel 22 und 25 sind mit Schrauben 27 an der Zentralachse 1 befestigt.

In der Figur 5 erkennt man die als Längsnut 20 ausgebildete zweite Kammer, die Öffnungen 23, den Deckel 25, die Öffnungen 26 und Schrauben 27. Der sich über die Länge der Längsnut 20 erstreckende gasgefüllte Schlauch 21 ist nicht gezeichnet.

In Figur 6 ist 1 wieder die feststehende Zentralachse und 2 der rotierende Walzenmantel. In der Zentralachse 1 befindet sich eine Bohrung 28, in der Gas enthaltende Schlauchabschnitte 29 angeordnet sind. Die Bohrung 28 bildet eine "zweite Kammer" und wird mit Druckflüssigkeit durch den Zapfen der Zentralachse 1 hindurch beschickt. Gleitschuhe 30 werden über Kolben 31 gegen den Walzenmantel 2 gedrückt infolge eines Überdruckes in den als Zylinderräume ausgebildeten "ersten Kammern" 32, die über Engstellen 33 mit der zweiten Kammer 28 in Verbindung stehen. Über eine Entlüftungsleitung 34, die die Zylinderräume 32 verbindet und schließlich über den Zapfen der Zentralachse 1 nach außen geführt wird, ist ein vorzugsweise einmaliger oder periodischer Gasabzug aus den Zylinderräumen 32 möglich. Jeder der Kolben 31 ist durch einen Dichtring 35 zur Bohrungsfläche 36 hin abgedichtet.

Die Schmierung der den Walzenmantel 2 stützenden Gleitflächen der Gleitschuhe 30 erfolgt in bekannter Weise hydrodynamisch. Bei dieser Ausführungsform der Erfindung bildet jeder der Zylinderräume 32 eine "erste Kammer" (im Sinne des Anspruchs 1) und die Bohrung 28 die "zweite Kammer".

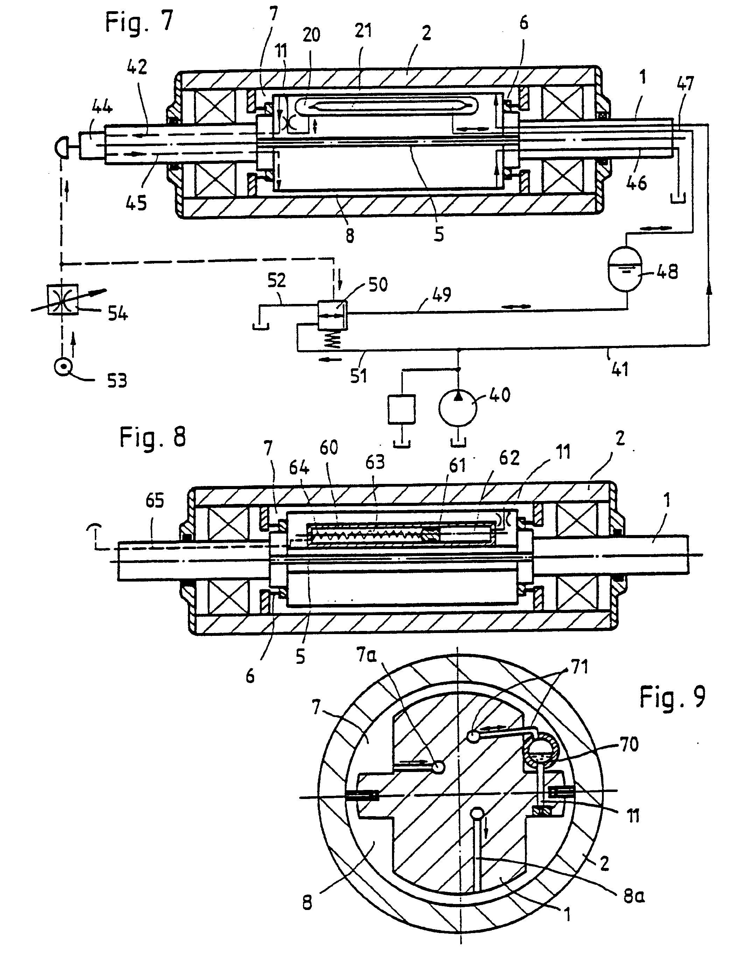

In Figur 7 sind die wesentlichen Teile der Walze mit den gleichen Bezugszeichen versehen wie in Figur 1.

Als "zweite Kammer" ist in der Zentralachse 1 (ähnlich wie in Fig. 4) eine Nut 20 mit einem gasgefüllten Schlauch 21 vorgesehen. Der die Nut 20 abschließende Deckel ist weggelassen. Man erkennt eine Druckflüssigkeitspumpe 40, die über eine Zuleitung 41 Flüssigkeit in die obere, als halbringförmige Flüssigkeitskammer ausgebildete "erste Kammer" 7 fördert. Diese ist, zwecks Steuerung des Flüssigkeitsdruckes über eine Leitung 42 mit einem Überströmventil 44 verbunden. Von diesem führt eine Leitung 45 in die untere halbringförmige Kammer 8, in der üblicherweise kein oder nur geringer Überdruck herrscht. Von hier führt eine Entleerleitung 46 nach außen. Die von der oberen halbringförmigen Kammer 7 zur Nut 20 führende gedrosselte Verbindungsleitung ist bei 11 schematisch angedeutet. Das Innere des Schlauches 21 ist über eine Leitung 47 mit dem oberen Bereich eines Hydrospeichers 48 verbunden. Dessen unterer Bereich ist über eine Leitung 49 und über ein Druckregelventil 50 entweder mit einem Abzweig 51 der Druckleitung der Pumpe 40 oder mit einer Entlastungsleitung 52 verbindbar. Von einer Druckluftquelle 53 und über ein Drucksteuerventil 54 kann Druckluft veränderbaren Druckes sowohl dem Überströmventil 44 als auch dem Druckregelventil 50 zugeführt werden. Eine Erhöhung des Luftdruckes bewirkt einerseits eine Erhöhung des Druckes in der Flüssigkeitskammer 7 ("erste Kammer") und somit gleichzeitig des Flüssigkeitsdruckes in der Nut 20 ("zweite Kammer") und andererseits ein Ansteigen des Flüssigkeitsspiegels im Hydrospeicher 48, so daß trotz der Flüssigkeitsdruckerhöhung in der Nut 20 das Volumen des Gaspolsters im Schlauch 21 im wesentlichen konstant gehalten wird.

Die Figur 8 zeigt schematisch, wie eine "zweite Kammer" als federbelasteter und somit elastisch nachgiebiger Druckspeicher ausgebildet werden kann. In einem langgestreckten Zylinder 60 befindet sich ein darin verschiebbarer Kolben 61, der den Innenraum des Zylinders in einen Flüssigkeitsraum 62 und in einen Atmosphärenraum 63 unterteilt. Der Flüssigkeitsraum 62 ist über eine gedrosselte Verbindungsleitung 11 mit der "ersten Kammer", nämlich mit der oberen halbringförmigen Kammer 7 verbunden. Der Atmosphärenraum 63, in dem eine Druckfeder 64 angeordnet ist, ist über eine Be- und Entlüftungsleitung 65 mit der äußeren Umgebeng der Walze verbunden.

In Figur 9 ist angenommen, die entere halbringförmige Flüssigkeitskammer 8 sei die "erste Kammer" und somit ständig vollkommen mit Flüssigkeit gefüllt ; der Flüssigkeitsdruck sei jedoch nur unwesentlich höher als der Atmosphärendruck. Leckflüssigkeit, die in den oberen halbringförmigen Zwischenraum 7 entweicht, wird durch die Entleerleitung 7a nach außen abgeführt. Über eine Zuleitung 8a wird die untere Flüssigkeitskammer 8 ständig gefüllt gehalten. In dem oberen Zwischenraum 7 ist eine "zweite Kammer", nämlich ein rohrförmiger Ausgleichsbehälter 70 angeordnet, dessen unterer Bereich über eine gedrosselte Verbindungsleitung 11 an die untere halbringförmige Flüssigkeitskammer 8 (= zweite Kammer) angeschlossen ist. Sein oberer Bereich ist über eine Be- und Entlüftungsleitung 71 mit der Atmospäre verbunden.

**Patentansprüche**

1. Walze für Maschinen zur Herstellung oder Behandlung von Papier-, Karton-, Textilbahnen od.dgl., mit einer feststehenden Zentralachse (1) und mit einem um diese Zentralachse rotierenden Walzenmantel (2) sowie mit den folgenden Merkmalen :

a)      eine im Inneren der Walze befindliche erste Kammer (7) hat die Form eines halbringförmigen, zwischen der feststehenden Zentralachse (1) und dem drehbaren Walzenmantel (2) befindlichen Zwischenraumes und ist mit einer Flüssigkeit gefüllt, die eine hydraulische Stützkraft von der Zentralachse (1) auf den Walzenmantel (2) übertragen kann ;

b) die erste Kammer (7) ist über wenigstens eine verengte Leitung (11, 24) mit einer ebenfalls im Inneren der Walze befindlichen zweiten Kammer (9, 20, 60, 70) verbunden ;

c) dadurch gekennzeichnet, daß die zweite Kammer (9, 20, 60, 70) teilweise mit Gas und teilweise mit der Flüssigkeit gefüllt ist, so daß sich in der zweiten Kammer, aufgrund von Druckänderungen in der ersten Kammer (7), ein veränderbarer Flüssigkeitsfüllungsgrad einstellt (Fig. 1-5, 7-9).

2. Walze mit einer feststehenden Zentralachse (1) und mit einem um diese Zentralachse rotierenden Walzenmantel (2) sowie mit den folgenden Merkmalen :

a) im Inneren der Walze ist zwischen der feststehenden Zentralachse (1) und dem rotierenden Walzenmantel (2) wenigstens eine erste Kammer (32) angeordnet in Form eines Zylinderraumes (32), der mit einer Flüssigkeit gefüllt ist, die eine hydraulische Stützkraft von der Zentralachse (1) über einen Gleitschuh (30) auf den Walzenmantel (2) übertragen kann ;

b) die erste Kammer (32) ist über eine Leitung (33) mit einer nur teilweise mit Flüssigkeit gefüllten zweiten Kammer (28) verbunden, so daß sich darin, aufgrund von Druckänderungen in der ersten Kammer (32), ein veränderbarer Flüssigkeitsfüllungsgrad einstellen kann ;

c) dadurch gekennzeichnet, daß die über eine verengte Leitung (z.B. Drosselbohrung 33) mit der ersten Kammer (32) verbundene zweite Kammer (28) ebenfalls im Inneren der Walze angeordnet ist (Fig. 6).

3. Walze nach Anspruch 1, dadurch gekennzeichnet, daß im stationären Zustand der Walze sowohl in der ersten Kammer (8) als auch in der zweiten Kammer (70) wenigstens angenähert Atmosphärendruck herrscht und daß die zweite Kammer (70) mittels einer Be- und Entlüftungsleitung (71), die durch die Zentralachse (1) verläuft, mit der Atmosphäre verbunden ist (siehe Fig. 9).

4. Walze nach Anspruch 1 oder 2, bei der im stationären Zustand in der ersten Kammer (7 ; 32) Überdruck herrscht, dadurch gekennzeichnet, daß die im Inneren der Walze befindliche zweite Kammer (9, 20, 28, 60) als Druckspeicher ausgebildet ist ; d.h. in der zweiten Kammer (9, 20, 28, 60) wirkt dem Flüssigkeitsdruck der Druck eines Gaspolsters (16, 21, 29), die Kraft einer Feder (64) od.dgl. entgegen.

5. Walze nach Anspruch 4, dadurch gekennzeichnet, daß in der zweiten Kammer (10) ein Gaspolster vorgesehen ist, wobei die zweite Kammer (10) eine nachgiebige Zwischenwand (z.B. Membran, Schwebekolben 17 od.dgl.) aufweist zwecks Trennung des Gaspolsters von der Flüssigkeit (Fig. 2).

6. Walze nach Anspruch 4 oder 5, dadurch gekennzeichnet, daß das in der zweiten Kammer (z.B. 9) befindliche Gaspolster (16) nach außen hermetisch verschlossen ist.

7. Walze nach Anspruch 4 oder 5, dadurch gekennzeichnet, daß das in der zweiten Kammer (20) befindliche Gaspolster (21) mit einer Nachführeinrichtung (47-52) verbunden ist, die mit Hilfe einer Regeleinrichtung (50) die in der zweiten Kammer (20) befindliche Gasmasse (21) bei einer Veränderung des in der ersten Kammer (7) herrschenden mittleren Flüssigkeitsdruckes so nachführt, daß das Volumen des Gaspolsters (21) wenigstens angenähert konstant bleibt (Fig. 7).

8. Walze nach einem der Ansprüche 1 bis 7, dadurch gekennzeichnet, daß die verengte Leitung als eine Drosselbohrung (11) oder als ein Drosselspalt (24) ausgebildet ist, dessen (deren) lichte Weite über seine (ihre) Länge wenigstens angenähert konstant ist und dessen (deren) Länge ein Vielfaches der lichten Weite beträgt.

9. Walze nach einem der Ansprüche 4 bis 8, dadurch gekennzeichnet, daß das Gaspolster (16 ; 21, 29) in einem an beiden Enden verschlossenen Schlauch enthalten ist.

10. Walze nach einem der Ansprüche 4 bis 8, dadurch gekennzeichnet, daß das Gaspolster durch die Hohlräume eines geschäumten Elastomerkörpers gebildet ist.

11. Walze nach einem der Ansprüche 1 bis 10, dadurch gekennzeichnet, daß der gesamte Querschnitt aller verengter Leitungen (11, 24), welche die beiden Kammern (7 und 9 bzw. 32 und 28) miteinander verbinden, das 0,0005- bis 0,05-fache derjenigen Begrenzungsfläche der ersten Kammer (7 bzw. 32) beträgt, welche die auf den Walzenmantel (2) wirkende Stützkraft erzeugt.

12. Walze nach Anspruch 1, worin zwei erste Kammern (7, 8) gebildet sind, indem der zwischen der feststehenden Zentralachse (1) und dem drehbaren Walzenmantel (2) befindliche ringförmige Zwischenraum mittels zweier Längsdichtungen (5) in zwei annähernd gleich große und flüssigkeitsgefüllte halbringförmige Kammern (7 und 8) unterteilt ist, deren Länge im wesentlichen gleich der Bahnbreite ist, dadurch gekennzeichnet, daß jede der beiden ersten Kammern (7, 8) mit einer als Druckspeicher ausgebildeten zweiten Kammer (9, 10) verbunden ist, wobei mindestens eine der Verbindungsleitungen (11, 12) als eine verengte Leitung ausgebildet ist.

13. Walze nach Anspruch 2, dadurch gekennzeichnet, daß die als Zylinderraum (32) ausgebildete erste Kammer über eine Entlüftungsleitung (34) mit der Atmosphäre verbindbar ist.

14. Walze nach einem der Ansprüche 1 bis 13, dadurch gekennzeichnet, daß, wie an sich bekannt, an jedem Walzenende die Abstützung der feststehenden Zentralachse und das Lager des Walzenmantels zueinander wenigstens angenähert mittig angeordnet sind.

## Claims

1. A roll for machines used to produce or process paper-, cardboard-, textile-webs or the like, with a stationary central axis (1), with a roll-shell (2) rotating about this central axis, and with the following characteristics:

a) a first chamber (7), located in the interior of the roll is in the form of a semi-circular opening located between the central axis (1) and the rotatable roll-shell (2) and is filled with a fluid adapted to transfer a hydraulic supporting force from the central axis (1) to the roll-shell (2) ;

b) the first chamber (7) is connected, through at least one constricted line (11, 24), to a second chamber (9, 20, 60, 70) also located in the interior of the roll ;

c) characterized in that the second chamber (9, 20, 60, 70) is filled partly with a gas and partly with the fluid so that, in the event of changes in pressure in the first chamber (7), the extent to which the second chamber is filled with fluid is variable (Figs. 1-5, 7-9).

2. A roll having a stationary central axis (1), a roll-shell (2) rotating about this central axis, and the following characteristics :

a) arranged in the interior of the roll, between the central stationary axis (1) and the rotating roll-shell(2), is at least one first chamber (32) in the form of a cylinder-space (32) which is filled with a fluid adapted to transfer a hydraulic supporting force from the central axis (1), through a sliding block (30), to the roll-shell (2) ;

b) the first chamber (32) is connected, through a line 33, to a second chamber (28) being filled only partly with fluid, so that, in the event of changes in pressure in the first chamber (32), the extent to which the second chamber can be filled with fluid may vary ;

c) characterized in that the second chamber (28), connected to the first chamber (32) through a constricted line (e.g. a choke-passage 33), is also arranged in the interior of the roll (Fig. 6).

3. A roll according to claim 1, characterized in that when the roll is in the stationary condition, the pressure obtaining both in the fist chamber (8) and in the second chamber (70) is at least approximately atmospheric ; and in that the second chamber (70) is connected to the atmosphere by means of an aerating an venting line running through the central axis (1) (Fig. 9).

4. A roll according to claim 1 or 2 in which an overpressure obtains in the first chamber (7, 32) in the stationary condition, characterized in that the second chamber (9, 20, 28, 60), located in the interior of the roll, is in the form of a pressure-accumulator, i.e. in the said second chamber, the pressure of a gas-cushion (16, 21, 29), or the force of a spring (64), or the like, counteracts the fluid-presssure.

5. A roll according to claim 4, characterized in that a gas-cushion is provided in the second chamber (10), which comprises a flexible partition (e.g. a diaphragm, a floating piston 17, or the like) for the purpose of separating the gas-cushion from the fluid (Fig. 2).

6. A roll according to claim 4 or 5, characterized in that the gas-cushion (16), located in the second chamber (e.g. 9) is closed off hermetically from the outside.

7. A roll according to claim 4 or 5, characterized in that the gas-cushion (21), located in the second chamber (20), is connected to a topping-up device (47-52) which, with the aid of a control-device (50), tops up the gas-mass (21) located in the second chamber (20), in the event of a change in the average fluid-pressure obtaining in the first chamber (7), in such a manner that the volume of the gas-cushion (21) remains at least approximately constant (Fig. 7).

8. A roll according to one of claims 1 to 7, characterized in that the constricted line is in the form of a choke-passage (11) or of choke-gap (24), the inside diameter of which is at least approximately constant, while the length thereof is a multiple of the said inside diameter.

9. A roll according to one of claims 4 to 8, characterized in that the gas-cushion (16, 21, 29) is contained in a flexible tube which is closed off at both ends.

10. A roll according to one of claims 4 to 8, characterized in that the gascushion is formed by the cavities in a foamed elastomeric element.

11. A roll according to one of claims 1 to 10, characterized in that the total cross-section of all of the constricted lines (11, 24), connecting the two chambers 7 and 9 ; 32 and 28) together, amounts to 0.0005- to 0.05- times the periphery of the first chamber (7, 32) which produces the supporting force acting upon the roll-shell (2).

12. A roll according to claim 1 wherein two first chambers (7, 8) are formed in that the annular space located between the stationary central axis (1) and the rotating roll-shell (2) is divided, by means of two longitudinal seals (5), into two semi-circular chambers (7 and 8) of approximately the same size and filled with fluid, the length thereof being substantially equal to the width of the web, characterized in that each of the two first chambers (7, 8) is connected to a second chamber (9, 10) in the form of a pressure-accumulator, at least one of the connecting lines (11, 12) being in the form of a constricted line.

13. A roll according to claim 2, characterized in that the first chamber, which is in the form of a cylinder-space (32), is connected to the atmosphere through a venting line (34).

14. A roll according to one of claims 1 to 13, characterized in that, as known per se, at each end of the roll the support for the stationary central axis, and the bearing for the roll-shell, are arranged approximately centrally each other.

## Revendications

1. Cylindre pour machine de fabrication ou traitement de nappes de papier, de carton, de matière textile ou analogue, comprenant un axe central fixe (1) et une enveloppe de cylindre (2) tournant autour de cet axe central, ce cylindre présentant en outre les particularités suivantes : -

a) une première chambre (7) se trouvant à l'intérieur du cylindre a la forme d'un espace intermédiaire en forme de demi-anneau se trouvant entre l'axe central fixe (1) et l'enveloppe rotative de cylindre (2) et est remplie d'un liquide qui peut transmettre une force hydraulique de soutien de l'axe central (1) vers l'enveloppe de cylindre (2),

b) la première chambre (7) communique par au moins un conduit rétréci (11, 24) avec une seconde chambre (9, 20, 60, 70) se trouvant aussi à l'intérieur du cylindre, caractérisé en ce que :

c) la seconde chambre (9, 20, 60, 70) est remplie partiellement de gaz et partiellement dudit liquide, de sorte qu'un degré variable de remplissage de liquide se règle dans la seconde chambre sous l'effet de variations de pression dans la première chambre (7) (figure 1-5, 7-9).

2. Cylindre à axe central fixe (1) et à enveloppe de cylindre (2) tournant autour de cet axe central, ce cylindre présentant en outre les particularités suivantes :

a) au moins une première chambre (32) est disposée à l'intérieur du cylindre, entre l'axe central fixe (1) et l'enveloppe rotative de cylindre (2), sous la forme d'un volume cylindrique (32) qui est rempli d'un liquide qui peut transmettre une force hydraulique de soutien de l'axe central (1) à l'enveloppe de cylindre (2) par l'intermédiaire d'un patin glissant (30),

b) la première chambre (32) communique par l'intermédiaire d'un conduit (33) avec une seconde chambre (28) qui n'est remplie que partiellement de liquide, de sorte qu'un degré variable de remplissage de liquide peut se régler sous l'effet de variations de pression dans la première chambre (32), caractérisé en ce que :

c) la seconde chambre (28), qui communique avec la première chambre (32) par l'intermédiaire d'un conduit rétréci (par exemple un perçage d'étranglement 33), est disposée aussi à l'intérieur du cylindre (figure 6).

3. Cylindre suivant la revendication 1, caractérisé en ce que, lorsque le cylindre est immobile, il règne au moins approximativement la pression atmosphérique à la fois dans la première chambre (8) et dans la seconde chambre (70) et en ce que cette seconde chambre (70) communique avec l'atmosphère par un conduit d'admission et d'évacuation d'air (71) qui s'étend dans l'axe central (1) (voir figure 9).

4. Cylindre suivant l'une des revendications 1 ou 2, dans lequel, à l'état immobile, il règne une surpression dans la première chambre (7, 32), caractérisé en ce que la seconde chambre (9, 20, 28, 60) se trouvant à l'intérieur du cylindre est réalisée sous la forme d'un accumulateur de pression, ce qui signifie que, dans cette seconde chambre (9, 20, 28, 60), la pression d'un coussin de gaz (16, 21, 29), la force d'un ressort (64) ou analogue s'oppose à la pression du liquide.

5. Cylindre suivant la revendication 4, caractérisé en ce qu'un coussin de gaz est prévu dans la seconde chambre (10), cette dernière comportant une cloison intermédiaire flexible (par exemple membrane, piston flottant 17 ou analogue) en vue de séparer le coussin de gaz du liquide (figure 2).

6. Cylindre suivant l'une des revendications 4 ou 5, caractérisé en ce que le coussin de gaz (16) se trouvant dans la seconde chambre (par exemple 9) fait l'objet d'une fermeture hermétique par rapport à l'extérieur.

7. Cylindre suivant l'une des revendications 4 ou 5, caractérisé en ce que le coussin de gaz (21) se trouvant dans la seconde chambre (20) communique avec un dispositif de poursuite (47-52) qui, au moyen d'un dispositif de régulation (50), suit la valeur de la masse de gaz (21) se trouvant dans la seconde chambre (20), lors d'une variation de la pression moyenne de liquide régnant dans la première chambre (7), de façon telle que le volume du coussin de gaz (21) demeure au moins approximativement constant (figure 7).

8. Cylindre suivant l'une des revendications 1 à 7, caractérisé en ce que le conduit rétréci est réalisé sous la forme d'un perçage d'étranglement (11), ou d'une fente d'étranglement (24), dont la largeur intérieure est au moins approximativement constante sur toute sa longueur et dont la longueur est égale à un multiple de cette largeur intérieure.

9. Cylindre suivant l'une des revendications 4 à 8, caractérisé en ce que le coussin de gaz (16 ; 21, 29) est contenu dans un tube souple fermé aux deux extrémités.

10. Cylindre suivant l'une des revendications 4 à 8, caractérisé en ce que le coussin de gaz est formé par les cavités d'un bloc de mousse élastomère.

11. Cylindre suivant l'une des revendications 1 à 10, caractérisé en ce que la section transversale totale de tous les conduits rétrécis (11, 24) qui réunissent entre elles les deux chambres (7 et 9, 32 et 28) est égale à 0,0005 à 0,05 fois la surface, limitant la première chambre (7, 32), qui produit la force de soutien s'exerçant sur l'enveloppe de cylindre (2).

12. Cylindre suivant la revendication 1, dans lequel il est réalisé deux premières chambres (7, 8), le volume intermédiaire de forme annulaire se trouvant entre l'axe central fixe (1) et l'enveloppe rotative de cylindre (2) étant divisé au moyen de deux garnitures longitudinales d'étanchéité (5) en deux chambres (7, 8) de forme semi-annulaire, approximativement de même importance et remplies de liquide, dont la longueur est pratiquement égale à la largeur de la nappe, caractérisé en ce que chacune des deux premières chambres (7, 8) communique avec une seconde chambre (9, 10) réalisée sous la forme d'un accumulateur de pression, au moins l'un des conduits de communication (11, 12) étant réalisé sous la forme d'un conduit rétréci.

13. Cylindre suivant la revendication 2, caractérisé en ce que la première chambre réalisée sous la forme d'un volume cylindrique (32) est agencée de façon à pouvoir communiquer avec l'atmosphère par l'intermédiaire d'un conduit d'évacuation d'air (34).

14. Cylindre suivant l'une des revendications 1 à 13, caractérisé en ce que, ainsi que cela est connu en soi, à chaque extrémité du cylindre, l'appui de l'axe central fixe et le montage à palier de l'enveloppe de cylindre sont disposés au moins approximativement au milieu l'un vers l'autre.

Fig.1

Fig. 2

Fig. 3

Fig. 4

P

Fig. 5

Fig. 6

Fig. 7

Fig. 8

Fig. 9